# EUROPÄISCHE PATENTSCHRIFT

(11) **EP 3 313 713 B1**
(45) Veröffentlichungstag und Bekanntmachung des Hinweises auf die Patenterteilung: **24.07.2019**
(21) Anmeldenummer: 16727516.3
(22) Anmeldetag: 08.06.2016
(51) Int. Cl.: B62D 15/02, B60W 30/06, B60W 30/14, B60W 50/14

(54) **PARKASSISTENZSYSTEM ZUM AUTOMATISIERTEN DURCHFÜHREN EINES EINPARKMANÖVERS IN EINE QUERPARKLÜCKE MIT ERKENNUNG EINES DIE QUERPARKLÜCKE NACH HINTEN BEGRENZENDEN BODENHINDERNISSES**
PARKING ASSIST SYSTEM FOR CARRYING OUT A PARKING MANOEUVRE IN AN AUTOMATED MANNER INTO A TRANSVERSE PARKING SPACE COMPRISING DETECTION OF A GROUND OBSTACLE DELIMITING THE TRANSVERSE PARKING SPACE TOWARDS THE REAR
SYSTÈME D'AIDE AU STATIONNEMENT PERMETTANT D'EFFECTUER UNE MANOEUVRE DE STATIONNEMENT AUTOMATISÉE DANS UNE PLACE DE STATIONNEMENT EN BATAILLE, ET MUNI D'UNE FONCTION DE RECONNAISSANCE D'UN OBSTACLE AU SOL DÉLIMITANT VERS L'ARRIÈRE LA PLACE DE STATIONNEMENT EN BATAILLE

(30) Priorität: 24.06.2015 DE 102015211754
(43) Veröffentlichungstag der Anmeldung: 02.05.2018
(73) Patentinhaber: Bayerische Motoren Werke Aktiengesellschaft, 80809 München (DE)
(72) Erfinder: ROMAINCZYK, Christoph, 81667 München (DE)
(86) Internationale Anmeldenummer: PCT/EP2016/062965
(87) Internationale Veröffentlichungsnummer: WO 2016/206973

(56) Entgegenhaltungen:
- EP-A1- 1 642 767
- EP-A2- 0 849 144
- DE-A1-102013 210 672
- DE-A1-102013 214 805

## Beschreibung

Die Erfindung betrifft Parkassistenzsysteme mit automatisierter Längs- und Querführung für Kraftfahrzeuge, insbesondere für Personenkraftwagen.

Bei Parkassistenzsystemen mit lediglich automatisierter Querführung wird die Lenkung des Kraftfahrzeugs während des Einparkvorgangs vom System übernommen. Die Längsführung muss der Fahrer durch entsprechendes Beschleunigen und Bremsen selbst übernehmen. Bei Parkassistenzsystemen mit automatisierter Querführung und automatisierter Längsführung wird auch die Aufgabe der Längsführung je nach Automatisierungsgrad der Längsführung teilweise oder vollständig vom Parkassistenzsystem übernommen. Bei Parkassistenzsystem mit vollautomatisierter Quer- und Längsführung werden beispielsweise die Lenkung, die Bremse, der Fahrzeugantrieb und die Fahrtrichtung (Vorwärts- oder Rückwärtsfahrt) vom Parkassistenzsystem gesteuert. Bei derartigen Parkassistenzsystemen hat der Fahrer beispielsweise die Möglichkeit, per Betätigung eines Bedienelements, beispielsweise einer Taste, das Fahrzeug selbständig einparken und optional ausparken lassen zu können.

Ein beispielhaftes Parkassistenzsystem mit automatischer Querführung und automatischer Längsführung ist in der Druckschrift "Parkassistent mit Längs- und Querführung", Dirk Ahrens, 5. Tagung Fahrerassistenz der TU München, München, 2012 beschrieben, die beispielsweise unter dem Link "http://mediatum.ub.tum.de/doc/1142099/1142099.pdf" im Internet abrufbar ist. Parkassistenzsysteme mit automatischer Quer- und Längsführung sind auch in den Druckschriften DE 10 2013 214 805 A1 und DE 10 2013 210 672 A1 beschrieben. EP 1 642 767 A1 ist als nächstliegender Stand der Technik nach dem Oberbegriff der Ansprüche 1 und 14 zu sehen.

Bekannte Parkassistenzsysteme unterstützen typischerweise das rückwärtige Einparken längs zur Fahrbahn in eine parallel zur Fahrbahn gelegene Längsparklücke, wobei das Fahrzeug rückwärts mit automatisierter Querführung und gegebenenfalls automatisierter Längsführung in einem oder mehreren Zügen entlang einer berechneten Einparktrajektorie in die Längsparklücke einparkt.

Neuere Parkassistenzsystem unterstützen teilweise auch zusätzlich das rückwärtige Einparken in eine Querparklücke quer zur Fahrbahn, wobei das Fahrzeug vorzugsweise rückwärts mit automatischer Querführung und gegebenenfalls automatischer Längsführung in einem oder mehreren Zügen entlang einer berechneten Parktrajektorie in die Querparklücke einparkt. Unter Querparklücken können auch sogenannte Schrägparklücken verstanden werden, die nicht orthogonal zur Fahrbahn ausgerichtet sind.

Derartige Parkassistenzsysteme für Querparklücken unterstützen zumindest solche Querparklücken, die durch ein seitliches Objekt auf der einen Seite der Querparklücke und ein anderes seitliches Objekt auf der anderen Seite der Querparklücke begrenzt werden. Bei den die Parklücke begrenzenden Objekten handelt es sich beispielsweise um parkende Kraftfahrzeuge, die quer zur Fahrbahn geparkt wurden. Bei einem derartigen die Parklücke seitlich begrenzenden Objekt kann es sich aber auch um ein Nichtfahrzeug-Objekt handeln, wie beispielsweise eine Säule, ein Poller, ein Zaun oder eine niedrige Bodenbebauung wie ein Pflanzkasten. Nach hinten werden derartige Querparklücken häufig durch ein Bodenhindernis begrenzt, beispielsweise durch einen Bordstein oder einen am Boden befestigten, parallel zum Boden verlaufenden länglichen Parkanschlag (z. B. ein Rohr).

Beispielsweise wird bei derartigen Parkassistenzsystemen zum Einparken in Querparklücken beim manuellen Vorbeifahren an beispielsweise quer zur Straße parkenden Kraftfahrzeugen automatisch eine Querparklücke zwischen den seitlichen die Querparklücke begrenzenden Objekten (beispielswiese in Querrichtung parkende Fahrzeuge) mittels einer Ultraschallsensorik vermessen. Hierbei wird typischerweise die in Richtung der Fahrbahn ausgerichtete Kontur der Begrenzungsobjekte bestimmt. Aufgrund der begrenzten Sensorreichweite (z. B. 4 m) ist es meistens nicht möglich, die hintere Begrenzung (z. B. einen Bordstein) der Querparklücke zu detektieren.

Basierend auf der Vermessung der Parklücke wird vor der Durchführung des Einparkmanövers eine Einparktrajektorie mit einer Parkendposition geplant, auf der das Fahrzeug rückwärts mit automatischer Querführung und gegebenenfalls automatischer Längsführung in einem oder mehreren Zügen in die Längsparklücke einparkt, um dann in der Parkendposition das Parkmanöver zu beenden.

Da das die Parklücke nach hinten begrenzende Bodenhindernis (z. B. der Bordstein) bei Vermessung der Parklücke meistens für die Ultraschallsensorik nicht sichtbar ist, kann es vorkommen, dass die Parkendposition bei nicht bekannter Position des die Parklücke nach hinten begrenzenden Bodenhindernisses so weit nach hinten gelegt wird, dass das Fahrzeug bei einem rückwärtigen Einparkmanöver zum Erreichen der Parkendposition mit den Hinterrädern auf das Bodenhindernis, z. B. auf den Bordstein, fahren müsste.

Es kann beispielsweise nach Vermessen der Parklücke eine derartige Parkendposition festgelegt werden, bei der die Erstreckung des eigenen Fahrzeugs in Richtung Fahrbahn in der Parkendposition auf die Erstreckung eines oder beider die Parklücke seitlich begrenzenden Objekte in Richtung Fahrbahn ausgerichtet ist. Beispielsweise wird die Erstreckung des eigenen Fahrzeugs in Richtung Fahrbahn in der Parkendposition auf die Erstreckung desjenigen Objekts der beiden die Parklücke seitlich begrenzenden Objekte in Richtung Fahrbahn ausgerichtet, welches sich weniger weit in Richtung Fahrbahn erstreckt. D. h. das Parkassistenzsystem orientiert sich an dem Objekt, dessen Grenze zur Fahrbahn hin weiter nach hinten versetzt ist und entsprechend weniger in Richtung Fahrbahn ragt. Handelt es sich bei dem Objekt, welches sich weniger weit in Richtung Fahrbahn erstreckt und an dem sich das Parkassistenzsystem für die Längserstreckung in der Parkendposition orientiert, um ein im Vergleich zum einparkenden Fahrzeug kürzeres Objekt (z. B. ein kürzeres Fahrzeug), so kann es leicht passieren, dass zum Erreichen der Parkendposition das einparkende Fahrzeug mit den Hinterrädern auf das die Parklücke nach hinten begrenzende Bodenhindernis (z. B. auf den Bordstein) hochfahren würde, um sich bündig zur Front des Objekts auszurichten.

Es ist Aufgabe der Erfindung, ein Parkassistenzsystem bzw. ein entsprechendes Einparkverfahren anzugeben, bei dem ein Hochfahren der Räder auf das die Parklücke nach hinten begrenzende Bodenhindernis vermieden wird.

Die Aufgabe wird durch die Merkmale der unabhängigen Patentansprüche gelöst. Vorteilhafte Ausführungsformen sind in den abhängigen Ansprüchen beschreiben.

Ein erster Aspekt der Erfindung betrifft ein Parkassistenzsystem zum Durchführen eines automatisierten Einparkmanövers eines Kraftfahrzeugs in eine Querparklücke quer zur Fahrbahn mit automatisierter Längs- und Querführung entlang einer Einparktrajektorie.

Das Parkassistenzsystem ist eingerichtet, eine am Ende des Einparkmanövers einzunehmende Parkendposition für das Kraftfahrzeug festzulegen. Beispielsweise wird die Querparklücke durch ein seitliches Objekt (z. B. ein erstes quer zur Fahrbahn parkendes Fahrzeug) auf der einen Seite der Querparklücke und/oder durch ein anderes seitliches Objekt (z. B. ein zweites quer zur Fahrbahn parkendes Fahrzeug) auf der anderen Seite der Querparklücke begrenzt. In diesem Fall ist das Parkassistenzsystem beispielsweise eingerichtet, vorder Durchführung des Einparkmanövers mittels einer Sensorik die Erstreckung des einen Objekts in Richtung Fahrbahn und/oder der Erstreckung des anderen Objekts in Richtung Fahrbahn zu bestimmen und basierend hierauf eine Parkendposition festzulegen.

Die Festlegung der Parkendposition erfolgt insbesondere vor der Durchführung des Einparkmanövers; es kann aber optional vorgesehen sein, dass eine initiale Parkendposition während des Einparkmanövers aufgrund zusätzlicher, während des Einparkmanövers erfasster Ultraschall-Information angepasst wird.

Das erfindungsgemäße Parkassistenzsystem ist eingerichtet, während der Durchführung des Einparkmanövers festzustellen, dass ein für das Antriebsmoment des Antriebsmotors charakteristisches Signal ein erstes Kriterium erfüllt, dessen Erfüllen auf ein Stoßen eines oder mehrerer Räder an ein Hindernis hinweist. Beispielsweise umfasst das Parkassistenzsystem einen Geschwindigkeitsregler zur Regelung der Geschwindigkeit des Kraftfahrzeugs auf eine durch das Parkassistenzsystem vorgegebene Soll-Geschwindigkeit, wobei der Geschwindigkeitsregler einen Integrator zur Integration einer Regelabweichung umfasst und das für das Antriebsmoment des Antriebsmotors charakteristische Signal ein Signal am Ausgang des Integrators oder ein davon abhängiges Signal ist. Ein derartiges Signal ist beispielsweise in der Druckschrift DE 10 2013 210 672 A1 beschrieben (siehe dort das Signal mit dem Bezugszeichen int).

Das für das Antriebsmoment des Antriebsmotors charakteristische Signal erfüllt beispielsweise das erste Kriterium, welches auf ein Stoßen der Räder an ein Hindernis hinweist, wenn das Signal größer oder größer gleich als ein bestimmter Schwellwert ist.

Vorzugsweise wird in diesem Zusammenhang außerdem geprüft, ob die Ist-Geschwindigkeit des Fahrzeugs im Wesentlichen null ist, beispielsweise, ob die Ist-Geschwindigkeit kleiner als einer sehr klein gewählte Stillstandseintrittsgeschwindigkeit V_{stillstand,eintritt} (z. B. V_{stillstand,eintritt} = 0,2 km/h). Vorzugsweise deutet unter dieser Voraussetzung das Erfüllen des ersten Kriteriums darauf hin, dass die Reifen an ein Hindernis stoßen. Beispielsweise wird zuerst festgestellt, dass die Ist-Geschwindigkeit im Wesentlichen null ist, und erst in Reaktion darauf wird geprüft, ob das für das Antriebsmoment des Antriebsmotors charakteristische Signal das erste Kriterium erfüllt.

Das erfindungsgemäße Parkassistenzsystem gemäß Anspruch 1 ist ferner eingerichtet, festzustellen, dass die bei Stoßen eines oder mehrerer Räder an das Hindernis erreichte Fahrzeugposition im Vergleich mit der Parkendposition ein zweites Kriterium erfüllt, dessen Erfüllen darauf hinweist, dass es sich bei dem Hindernis um das die Querparklücke nach hinten hin begrenzendes Bodenhindernis (z. B. der Bordstein) handelt. Beispielweise erfüllt die bei Stoßen eines oder mehrerer Reifen an das Hindernis erreichte Fahrzeugposition das zweite Kriterium, wenn ein Abweichungsmaß zwischen der bei Stoßen eines oder mehrerer Räder an das Hindernis erreichten Fahrzeugposition und der Parkendposition kleiner oder kleiner gleich als ein Schwellwert ist. Beispielweise wird das zweite Kriterium erfüllt, wenn der Abstand in der angenommenen Längsrichtung der Parklücke zwischen der Fahrzeugposition bei Stoßen der Reifen an das Hindernis und der angestrebten Parkendposition kleiner als ein vorzugsweise applizierbarer Wert (z.B. 50 cm) ist; d. h. das Fahrzeug befindet sich dann weniger als z. B. 50 cm an der Parkendposition. Wenn die Fahrzeugposition das zweite Kriterium erfüllt und die Fahrzeugposition damit nah an der Parkendposition liegt, ist davon auszugehen, dass es sich bei dem Hindernis um das die Parklücke nach hinten begrenzende Bodenhindernis (z. B. Bordstein oder Reifenstopper) handelt.

Sofern die beiden Kriterien erfüllt sind, kann davon ausgegangen werden, dass die Reifen bereits das die Parklücke nach hinten begrenzende Bodenhindernis (z. B. Bordstein) berühren. Erfindungsgemäß wird in diesem Fall ein weiteres Eintauchen des Fahrzeugs in die Parklücke mit Überfahren des die Parklücke nach hinten begrenzenden Bodenhindernisses verhindert und das Einparkmanöver wird vor Erreichen der vorher bestimmten Parkendposition beendet.

Das erfindungsgemäße Parkassistenzsystem erlaubt somit durch Auswertung des für das Antriebsmoments charakteristischen Signals und der Fahrzeugposition eine Detektion des die Querparklücke nach hinten begrenzenden Bodenhindernisses, so dass ein Überrollen des die Parklücke begrenzenden Bodenhindernisses vermieden werden kann.

Vorzugsweise umfasst das Parkassistenzsystem eine insbesondere optische oder akustische Ausgabeeinrichtung zur Signalisierung eines erfolgreichen Abschlusses eines Einparkmanövers an den Fahrer. Beispielsweise wird ein erfolgreicher Abschluss des Einparkmanövers auf einem Bildschirm im Fahrzeugcockpit dargestellt, beispielsweise durch eine Textinformation (z. B. "Parkmanöver abgeschlossen") und/oder durch ein grafisches Symbol (z. B. ein Parksymbol mit einem Haken). Erfindungsgemäß wird vorzugsweise im Fall des Erfüllens beider Kriterien bei Beenden des Einparkmanövers trotz Nichterreichen der zu Beginn festgelegten Parkendposition (z.B. ausgerichtet an der Front eines oder zweier begrenzender Objekte) dem Nutzer ein erfolgreicher Abschluss des Einparkmanövers signalisiert. Dies bedeutet, dass der Fahrer trotz Nichterreichen der vorher festgelegten Parkendposition davon ausgeht, dass das Parkmanöver erfolgreich abgeschlossen wurde. Der Fahrer wird vorzugsweise bei vorzeitigem Beenden des Parkmanövers nicht durch eine Fehlermeldung seitens des Parkassistenzsystems verunsichert.

Gemäß einer Ausführungsform ist das Parkassistenzsystem eingerichtet, im Fall des Erfüllens beider Kriterien das Einparkmanöver an der bei Stoßen eines oder mehrerer Räder an das Hindernis erreichten Fahrzeugposition zu beenden. Nach Zurücknahme des Antriebsmoments in dieser Fahrzeugposition kann es sein, dass das Fahrzeug noch einige Zentimeter ausgehend von dieser Position in Richtung der Fahrbahn zurückfedert.

Gemäß einer dazu alternativen Ausführungsform wird im Fall des Erfüllens beider Kriterien die Fahrtrichtung aktiv umgekehrt (beispielsweise wird bei einem rückwärtigen Parkmanöver ein Vorwärtsgang eingelegt) und dann das Kraftfahrzeugs entgegen der bisherigen Fahrtrichtung um eine gewisse Strecke (z. B. 5 cm bis 50 cm) automatisiert bewegt (d.h. auf die Fahrbahn zu bewegt), bevor dann das Einparkmanöver beendet wird. Dies hat im Vergleich mit der anderen Ausführungsform den Vorteil, dass dann in der schließlich eingenommenen Endposition die Reifen weiter vom die Parklücke nach hinten begrenzenden Bodenhindernis (z. B. Bordstein) beabstandet sind und das Fahrzeug weniger oder überhaupt nicht über das Bodenhindernis ragt.

Vorzugsweise wird ein Abweichungsmaß (beispielsweise die Distanz zwischen den beiden Positionen in der angenommenen Längsrichtung der Parklücke oder die Distanz zwischen den beiden Positionen in Richtung des Fahrschlauchs) zwischen der bei Stoßen eines oder mehrerer Reifen an das Hindernis erreichten Fahrzeugposition und der Parkendposition berechnet, und dieses Abweichungsmaß wird bewertet, insbesondere durch einen wie oben beschriebenen Schwellwert-Vergleich.

Es ist aber nicht zwingend nötig, ein derartiges Abweichungsmaß zu berechnen. Beispielsweise wird beim Eintauchen in die Parklücke irgendwann festgestellt, dass die Fahrzeugposition eine bestimmte Längsposition in Bezug auf die Parkendposition überschritten hat, beispielsweise nur noch weniger als 50 cm von der Parkendposition entfernt ist. Fährt das Fahrzeug in der bisherigen Fahrtrichtung nun weiter, würde das zweite Kriterium bei Stoßen der Reifen an das Bodenhindernis sofort erfüllt, ohne dass die Abweichungsmaß für die konkrete Fahrzeugposition berechnet werden muss. Stößt das Fahrzeug dann irgendwann tatsächlich an ein Hindernis, was durch Erfüllen des ersten Kriteriums festgestellt wird, ist das zweite Kriterium dann in Bezug auf die aktuelle Fahrzeugposition ohnehin bereits erfüllt.

Die Fahrzeugposition und die Parkendposition sind vorzugsweise auf einen Referenzpunkt des Fahrzeugs bezogen, beispielsweise auf die Mitte der Hinterachse des Fahrzeugs. Dies bedeutet, dass sich bei Vorliegen einer Fahrzeugposition die Mitte der Hinterachse an der jeweiligen Fahrzeugposition befindet; in der Parkendposition befindet sich damit die Mitte der Hinterachse an der Parkendposition.

Ein zweiter Aspekt der Erfindung betrifft ein Verfahren zum Durchführen eines automatisierten Einparkmanövers eines Kraftfahrzeugs in eine Querparklücke quer zur Fahrbahn mit automatisierter Längs- und Querführung entlang einer Einparktrajektorie.

Gemäß dem Verfahren wird eine am Ende des Einparkmanövers einzunehmenden Parkendposition für das Kraftfahrzeug festgelegt.

Während der Durchführung des Einparkmanövers wird festgestellt, dass ein für das Antriebsmoment des Antriebsmotors charakteristisches Signal ein erstes Kriterium erfüllt, dessen Erfüllen auf ein Stoßen eines oder mehrerer Räder an ein Hindernis hinweist. Eine entsprechende Prüfung auf das Erfüllen des Kriteriums erfolgt beispielsweise erst dann, nachdem festgestellt wurde, dass die Ist-Geschwindigkeit des Fahrzeugs im Wesentlichen null ist.

Es wird festgestellt, die bei Stoßen eines oder mehrerer Räder an das Hindernis erreichte Fahrzeugposition im Vergleich mit der Parkendposition ein zweites Kriterium erfüllt, dessen Erfüllen darauf hinweist, dass es sich bei dem Hindernis um das die Querparklücke nach hinten hin begrenzende Bodenhindernis handelt.

Im Fall des Erfüllens beider Kriterien wird das Einparkmanöver vor Erreichen der Parkendposition beendet.

Die vorstehenden Ausführungen zum erfindungsgemäßen Parkassistenzsystem nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Parkassistenzsystems.

Die Erfindung wird nachfolgend unter Zuhilfenahme auf die beigefügten Zeichnungen anhand eines Ausführungsbeispiels beschrieben. In diesen zeigen:
- Fig. 1: einen aus dem Stand der Technik bekannten Geschwindigkeitsregler eines Parkassistenzsystems;
- Fig. 2: ein beispielhaftes Ablaufdiagramm für ein erfindungsgemäßes Parkassistenzsystem;
- Fig. 3: eine Einparksituation in eine Querparklücke; und
- Fig. 4: eine resultierende Parkposition nach Beenden des Parkmanövers.

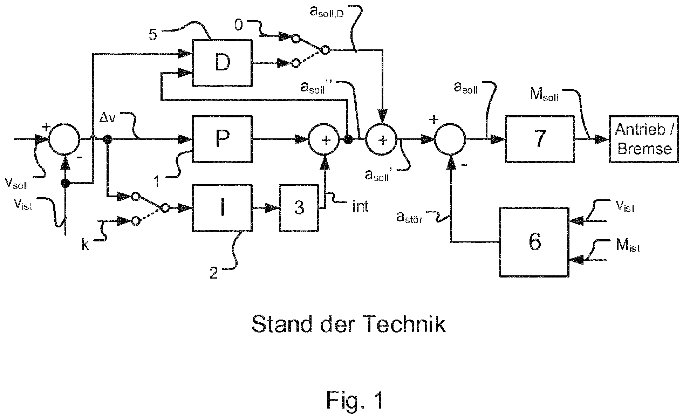

Fig. 1 zeigt in schematischer Weise einen aus der Druckschrift DE 10 2013 210 672 A1 bekannten Geschwindigkeitsregler zur Längsführung eines Parkassistenzsystems. Der Offenbarungsgehalt dieser Druckschrift wird hiermit durch Bezugnahme in den Offenbarungsgehalt dieses Dokuments aufgenommen.

Der Geschwindigkeitsregler umfasst einen P-Anteil 1, der eine Regelabweichung Δv = vₛₒₗₗ - vᵢₛₜ zwischen einer seitens des Parkassistenzsystems vorgegebenen Fahrzeug-Soll-Geschwindigkeit vₛₒₗₗ und einer Fahrzeug-Ist-Geschwindigkeit vᵢₛₜ entgegennimmt und ein Ausgangssignal erzeugt, welches proportional zur Regelabweichung Δv ist. Bei der Fahrzeug-Soll-Geschwindigkeit vₛₒₗₗ und der Fahrzeug-Ist-Geschwindigkeit vᵢₛₜ handelt es sich bei diesem Ausführungsbeispiel um Größen mit einem Wertebereich größer gleich null. Die Bewegungsrichtung (Vorwärtsrichtung oder Rückwärtsrichtung) ergibt sich aus der Gangwahl (Vorwärtsgang oder Rückwärtsgang).

Ferner umfasst der Geschwindigkeitsregler einen I-Anteil 2, der vorzugsweise zwischen zwei Zuständen umschaltbar ist. In einem ersten Zustand, welcher der in Fig. 1 mit durchgezogener Linie gezeichnete Schalterstellung am Eingang des I-Anteils 2 entspricht, wird die Regelabweichung Δv = vₛₒₗₗ - vᵢₛₜ seitens des I-Anteils 2 entgegengenommen und integriert und basierend auf dem durch Integration der Regelabweichung Δv erzeugten Integralwert int die Stellgröße des Geschwindigkeitsreglers ermittelt. Der I-Anteil 1 ist in diesem Zustand aktiviert, d. h. der I-Anteil bestimmt durch Integration der Regelabweichung Δv einen Integralwert int, wobei die Stellgröße des Regelkreises von dem Integralwert int abhängt. Der Integralwert int wird hierbei durch einen Begrenzer 3 zwischen 0 als untere Grenze und einem Maximalwert intₘₐₓ als obere Grenze begrenzt. Der Integralwert int und das Ausgangssignal des P-Anteils 1 werden addiert.

Vorzugsweise ist zusätzlich zu dem ersten Zustand noch ein zweiter Zustand vorgesehen, welcher der in Fig. 1 mit gestrichelter Linie gezeichneten Schalterstellung am Eingang des I-Anteils 2 entspricht; in diesem zweiten Zustand wird die Regelabweichung Δv nicht integriert. Stattdessen wird der I-Anteil mit einem zu integrierenden konstanten Wert k mit k < 0 beaufschlagt, der von der Regelabweichung Δv unabhängig ist, so dass der Integralwert int bei null bleibt, sofern der Integralwert int bereits null war, oder rampenförmig auf null reduziert wird, sofern der Integralwert int vorher größer null war. Die Steigung der Rampe hängt von dem Wert k ab. Beispielsweise wird der I-Anteil 2 in dem zweiten Zustand statt mit der aktuellen Regelabweichung Δv mit einem von der Regelabweichung unabhängigen Wert von k = -20m/s beaufschlagt. Es wird darauf hingewiesen, dass auf die Schaltbarkeit des I-Anteils und auf den zweiten Zustand zur Vereinfachung des Geschwindigkeitsreglers verzichtet werden könnte.

Durch Addition des Ausgangssignals des P-Anteils 1 und des Integralwerts int des I-Anteils 2 ergibt sich eine Sollbeschleunigung aₛₒₗₗ", bei der das Ausgangssignal eines optionalen D-Anteils 5 noch nicht berücksichtigt ist.

Bei dem optionalen D-Anteil 5 handelt es sich um einen aktivierbaren D-Anteil 5, der bei Bedarf zum Verzögern des Fahrzeugs nach Überwinden eines bodennahen Hindernisses aktiviert wird (dazu wird der Schalter am Ausgang des D-Anteils 5 in die gestrichelt dargestellte Schalterstellung umgeschaltet). Die Sollbeschleunigung aₛₒₗₗ' berücksichtigt zusätzlich noch das Ausgangssignal des optionalen D-Anteils. Es könnte zur Vereinfachung des Geschwindigkeitsreglers auf den D-Anteil verzichtet werden.

Ferner ist ein Störgrößenschätzer 6 vorgesehen, der in Abhängigkeit der aktuellen Ist-Geschwindigkeit vᵢₛₜ und dem aktuellen Moment Mᵢₛₜ eine Beschleunigung a_{stör} als Störgröße berechnet. Im Störgrößenschätzer 6 wird aus der aktuellen Ist-Geschwindigkeit vᵢₛₜ durch Differenzieren eine aktuelle Beschleunigung bestimmt und diese aktuelle Beschleunigung mit dem aktuellen in eine Beschleunigung umgerechneten Moment Mᵢₛₜ verglichen. Aus diesem Vergleich wird über ein geeignetes Übertragungsverhalten dann die Störgröße a_{stör} berechnet. Sofern die aktuelle Beschleunigung und das aktuelle Moment Mᵢₛₜ zusammenpassen, ist der Wert der Störgröße a_{stör} gleich null. Durch Subtraktion der Störgröße a_{stör} von der Sollbeschleunigung aₛₒₗₗ' wird die Sollbeschleunigung aₛₒₗₗ berechnet. Es wird darauf hingewiesen, dass die Verwendung eines Störgrößenschätzers 6 für das Ausführungsbeispiel in Fig. 1 nicht zwingend notwendig ist.

Aus der Sollbeschleunigung aₛₒₗₗ wird in Block 7 ein Sollmoment Mₛₒₗₗ berechnet. Das Sollmoment Mₛₒₗₗ wird dann in ein Sollmoment für den Antrieb und ein Sollmoment für die Bremse aufgeteilt (nicht dargestellt).

Das Parkassistenzsystem ist eingerichtet, bei einer Behinderung durch ein Bodenhindernis den I-Anteil 2 zu aktivieren, so dass aufgrund der Integration der Regelabweichung Δv ein derart hohes Antriebsmoment in Fahrtrichtung hervorgerufen wird, dass das Kraftfahrzeug je nach Höhe des Bodenhindernisses das Bodenhindernis überwinden kann. Wenn der I-Anteil 2 aktiviert wird, wird am Eingang des I-Anteils die durchgezogen dargestellte Schalterstellung eingenommen, so dass die Regelabweichung Δv vom I-Anteil 2 entgegengenommen und integriert wird. Der resultierende Integralwert int des I-Anteils 2 kann deutlich größer werden als der Ausgangswert des P-Anteils 1.

Die Schalterstellung am Eingang des I-Anteils 2 hängt vorzugsweise von der Ist-Geschwindigkeit vᵢₛₜ und dem Zustand des Geschwindigkeitsreglers ab.

Der I-Anteil wird aktiviert und integriert die Regelabweichung Δv (d. h. dieser wird dann in den ersten Zustand versetzt, welcher der in Fig. 1 mit durchgezogener Linie gezeichnete Schalterstellung am Eingang des I-Anteils 2 entspricht), wenn
1. die Ist-Geschwindigkeit vᵢₛₜ kleiner als die sehr klein gewählte Stillstandseintrittsgeschwindigkeit v_{Stillstand,eintritt} (beispielsweise v_{Stillstand,eintritt} = 0,2 km/h) wird und
2. der Geschwindigkeitsregler sich in einem Aktivitätszustand befindet, in dem das Fahrzeug gewöhnlicherweise vorwärts oder rückwärts fährt.

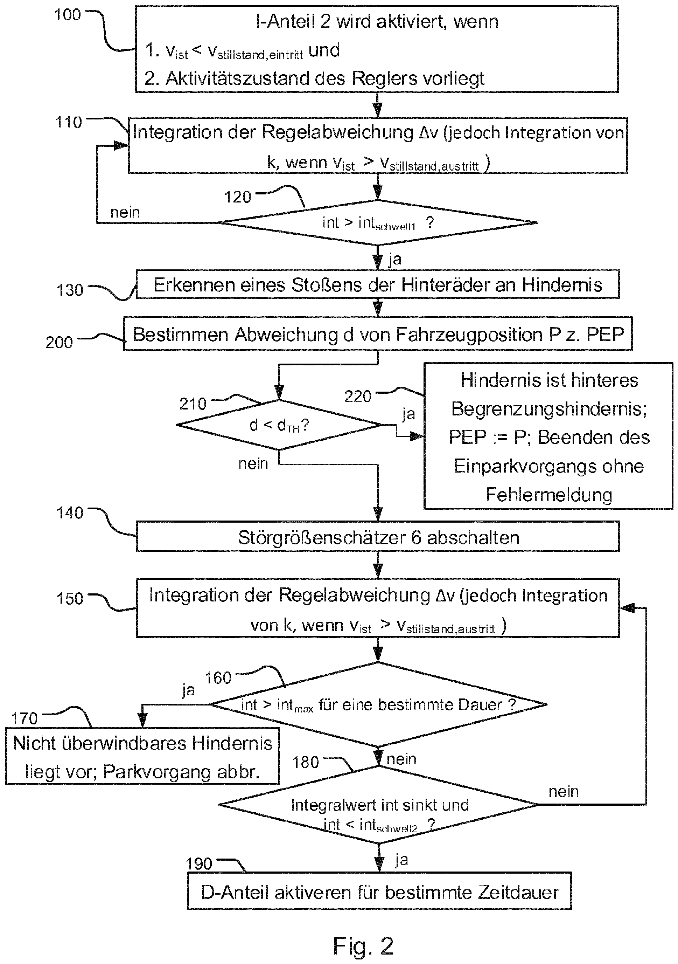

Dies entspricht dem Schritt 100 im Ablaufdiagramm in Fig. 2.

Sofern die Aktivierung des I-Anteils 2 nicht erfolgt, führt der I-Anteil 2 eine Integration der konstanten Größe k < 0 durch, so dass der Integralwert int auf null geführt oder auf null gehalten wird.

Das kumulative Vorliegen beider Bedingungen 1. und 2. zeigt an, dass ein seitens des Parkassistenzsystems unbeabsichtigter Fahrzeugstillstand vorliegt.

Bei aktivem I-Anteil 2 nimmt der Integralwert int durch Integration der Regelabweichung Δv ausgehend von null zu (s. Schritt 110 in Fig. 2). Die Integration der Regelabweichung Δv wird jedoch abgebrochen und stattdessen der negative Wert k integriert, wenn sich das blockierte Fahrzeug wieder in Bewegung setzt und v > v_{stillstand,austritt} wird (mit beispielsweise v_{stillstand,austritt} = 0,3 km/h). Hierdurch wird der Integralwert int rampenförmig reduziert.

Wenn der Integralwert int einen bestimmten Schwellwert int_{schwell1} überschritten hat (s. Abfrage 120), wird hieran erkannt, dass die Räder an ein Hindernis stoßen, welches die Fahrzeugbewegung blockiert (s. Schritt 130).

In Schritt 200 wird die Abweichung d der aktuellen Fahrzeugposition zur Parkendposition PEP bestimmt; bei der Abweichung d handelt es sich beispielsweise um die Distanz in der angenommenen Längsrichtung der Querparklücke zwischen der aktuellen Fahrzeugposition und der Parkendposition PEP.

In Schritt 210 wird geprüft, ob die aktuelle Fahrzeugposition P innerhalb eines vorgegebenen Toleranzbands unmittelbar vor der Parkendposition PEP liegt, d. h. ob die Abweichung d der aktuellen Fahrzeugposition P zur Parkendposition PEP kleiner als ein Schwellwert d_{TH} ist, der die Breite des Toleranzbands markiert.

Wenn dies der Fall ist, wird davon ausgegangen, dass es sich bei dem Hindernis um das die Querparklücke nach hinten begrenzende Bodenhindernis (z. B. Bordstein) handelt, und das Einparkmanöver wird beendet (s. Schritt 220). Hierzu wird die Parkendposition PEP auf die aktuelle Fahrzeugposition P gesetzt, d. h. PEP:= P. Das Parkassistenzsystem geht nun davon aus, dass das Fahrzeug mit der aktuellen Fahrzeugposition P die neu gesetzte Parkendposition PEP = P erreicht hat, und beendet automatisch das Einparkmanöver. Auf dem Bildschirm im Fahrzeugcockpit wird ein erfolgreicher Abschluss des Parkmanövers dargestellt, beispielsweise durch eine Textinformation (z. B. "Parkmanöver abgeschlossen") und/oder durch ein grafisches Symbol (z. B. ein Parksymbol mit einem Haken).

Wenn die Abweichung d größer gleich dem Schwellwert d_{TH} ist, erfolgt keine Beendigung des Parkmanövers.

Zunächst wird der Störgrößenschätzer 6 in der Weise abgeschaltet, dass dieser dann seinen Ausgangswert a_{stör} während des abgeschalteten Zustands konstant hält (s. Schritt 140).

Sofern die Fahrzeuggeschwindigkeit vᵢₛₜ die Stillstandaustrittsgeschwindigkeit v_{stillstand,austritt} nicht überschreitet, wird die Regelabweichung Δv weiterhin integriert (s. Schritt 150) und der Integralwert int nimmt weiter zu. Sofern die Fahrzeuggeschwindigkeit vᵢₛₜ jedoch größer als v_{stillstand,austritt} wird, wird über den I-Anteil 2 der konstante negative Wert k integriert, so dass der Integralwert int rampenförmig reduziert wird.

Wenn der Integralwert int soweit zunimmt, dass der Integralwert int dem maximal möglichen Integralwert intₘₐₓ für eine bestimmte ununterbrochene Dauer (beispielsweise 3s) entspricht (s. Abfrage 160), wird hieran das Vorliegen eines nicht überwindbaren Bodenhindernisses erkannt und der automatische Parkvorgang wird abgebrochen (s. Schritt 170). An den Fahrer wird eine entsprechende Abbruchmitteilung in optischer oder akustischer Form ausgegeben, beispielsweise auf dem Bildschirm im Fahrzeugcockpit.

Wenn, nachdem das Bodenhindernis bereits vorher erkannt wurde (s. Schritt 130), der Integralwert int nach Überwinden des Hindernisses wieder sinkt und unter einen Schwellwert int_{schwell2} fällt (s. Abfrage 180), wird der D-Anteil 5 für eine bestimmte Zeitdauer (beispielsweise für 2 s nach Hindernisüberwindung) aktiviert (s. Schritt 190), um das Fahrzeug schnell zu verzögern und so einen Zusammenstoß mit anderen Fahrzeugen oder anderen Objekten zu verhindern.

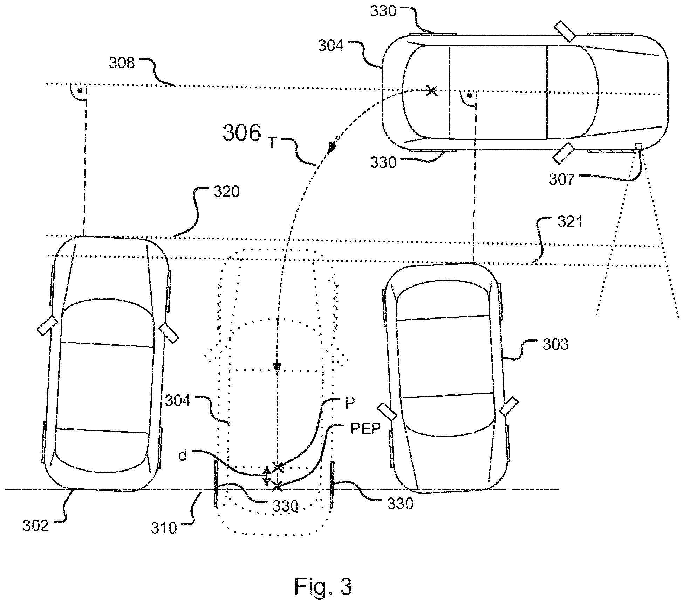

Fig. 3 zeigt eine Einparksituation in eine Querparklücke 301 vor Beginn des Einparkvorgangs mit einem beispielhaften erfindungsgemäßen Parkassistenzsystems mit automatisierter Längs- und Querführung.

Zunächst wird das Parkassistenzsystem durch Betätigen einer Parktaste seitens des Fahrers aktiviert. Nach Einschalten des Parkassistenzsystems wird der aktuelle Status der Parklückensuche in einem Bildschirm der Instrumentenkombination im Fahrzeugcockpit dargestellt.

Beim langsamen Vorbeifahren an den quer zur Fahrbahn 306 parkenden Kraftwagen 302, 303 wird mittels eines seitlichen Ultraschallsensors 307 fortlaufend der seitliche Parkbereich vermessen. Hierbei wird an den einzelnen Fahrzeugpositionen bei der Vorbeifahrt die jeweilige Distanz zwischen dem Ultraschallsensor 307 und dem seitlich nächstliegenden Objekt ermittelt.

Basierend auf den per Ultraschall gemessenen Distanzwerten wird eine Umgebungskarte erzeugt, in der die Grenzkonturen der Objekte in Richtung Fahrbahn 306 eingetragen sind. Die Reichweite des Ultraschallsensors 307 ist typischerweise auf ca. 4 m begrenzt; eine genaue Vermessung des hinterste Bereich der Parklücke 301, insbesondere die Detektion eines die Parklücke nach hinten begrenzenden Bordsteins 310 ist daher häufig nicht möglich.

Solange das Fahrzeug 304 noch nicht in den Stillstand gekommen ist, wird bei der Vorbeifahrt die Messung fortlaufend weitergeführt und die Umgebungskarte fortlaufend an die neuen Messwerte angepasst.

Sofern die Querparklücke 301 als geeignete Querparklücke erkannt wurde, wird ein Piktogramm einer erkannten Querparklücke auf dem Bildschirm im Fahrzeugcockpit dargestellt. Zur Erkennung einer geeigneten Querparklücke wird beispielsweise geprüft, ob die Parklücke eine Breite zwischen zwei Objekten aufweist, die der eigenen Fahrzeugbreite plus mindestens 0,7 m entspricht und im Rahmen der Vermessung der Parklücke in der Parklücke quer zur Fahrbahn in der Reichweite der Sensorik (z. B. ca. 4 m) kein Objekt detektiert wird.

Nachdem die Querparklücke 301 als geeignete Querparklücke erkannt wurde und das Fahrzeug in den Stillstand gekommen ist, wird eine Einparktrajektorie T mit einer geplanten Parkendposition PEP berechnet, auf der das eigene Fahrzeug 304 in einem oder mehreren Zügen rückwärts mit automatischer Querführung in die Querparklücke 301 einparken soll. Die Einparktrajektorie T und die Parkendposition PEP sind auf einen bestimmten Bezugspunkt des Fahrzeugs 304 bezogen, beispielsweise auf die Mitte der Hinterachse des eigenen Kraftfahrzeugs 304.

Die Parkendposition PEP hängt vorzugsweise von der Erstreckung des Fahrzeugs 302 und/oder der Erstreckung der Fahrzeugs 303 ab. Die Erstreckung des Kraftfahrzeugs 302 in Richtung Fahrbahn 306 wird in Fig. 3 durch die Linie 320 markiert; die Erstreckung des Kraftfahrzeugs 303 in Richtung Fahrbahn 306 wird in Fig. 1 durch die Linie 321 markiert.

Beispielsweise wird eine Einparktrajektorie T mit einer geplanten Parkendposition PEP berechnet, wobei in der Parkendposition PEP die Erstreckung des Fahrzeugs 304 in Richtung Fahrbahn auf die Hälfte des Versatzes der Erstreckung der beiden Objekte 302, 303 ausgerichtet ist. Eine entsprechende beispielhafte einzügige Einparktrajektorie mit passender Parkendposition PEP ist in Fig. 1 dargestellt. Die resultierende Kontur des eigenen Fahrzeugs 304 in der geplanten Parkendposition PEP ist in Fig. 3 punktiert dargestellt. Das Parkassistenzsystem kann optional eingerichtet sein, dass beim Eintauchen in die Parklücke in Abhängigkeit der dann sensorisch besser erfassbaren Ausrichtung der beiden Objekte 302, 303 noch leichte Korrekturen hinsichtlich der Parkendposition PEP vorgenommen werden.

Nach Bestimmung der Einparktrajektorie T kann das Parkmanöver durch Betätigen einer Parktaste im Fahrzeugcockpit ausgelöst werden. Das Parkassistenzsystem übernimmt während des Parkvorgangs die Lenkung, das Beschleunigung und Bremsen und wechselt bei Bedarf die Gänge.

In der in Fig. 3 dargestellten Situation würde die Hinterräder 330 bereits vor Erreichen der Parkendposition PEP an den Bordstein 310 stoßen, so dass zum Erreichen der dargestellten Parkendposition PEP die Hinterräder 330 auf den Bordstein 310 hochfahren müssten. Bei Erreichen der Position P (die Mitte der Hinterachse liegt dann auf der Position P) stoßen ein oder beide Hinterräder 330 an den Bordstein 310 und das Fahrzeug wird in den Stillstand gebremst. Das Anstoßen wird durch Auswertung des Integralwerts int festgestellt, wie dies bereits im Zusammenhang mit Fig. 2 erläutert wurde (s. die Abfrage 120 in Fig. 2).

Es wird die Abweichung d von der Fahrzeugposition P zur vorher berechneten Parkendposition PEP berechnet (s. Schritt 200). Die Abweichung d ergibt sich beispielsweise aus der Distanz zwischen den beiden Positionen P und PEP in der angenommenen Längsrichtung der Parklücke (d. h. eine Querabweichung orthogonal zur angenommenen Längsrichtung der Parklücke 301 wird beispielsweise bei der Abweichung nicht berücksichtigt).

Bei der in Fig. 3 dargestellten Situation wird in der Abfrage 210 aus Fig. 2 festgestellt, dass die Abweichung von der Fahrzeugposition P zur vorher berechneten Parkendposition PEP kleiner als der Schwellwert d_{TH} ist (beispielsweise d_{TH} = 50 cm).

Das Parkassistenzsystem schließt hieraus, dass das Fahrzeug 304 an den hinteren Bordstein 10 stößt und setzt die Parkendposition auf die erreichte Position P, d. h. PEP:= P. Da die Zielposition des Parkmanövers damit bereits in der Position P erreicht wurde, wird das Einparkmanöver in der Position P beendet und die Parksperre eingelegt, ohne dass das Fahrzeug auf den Bordstein 310 fährt. Nach Zurücknahme des Antriebsmoments in der Position P federt das Fahrzeug 304 in der Praxis noch einige Zentimeter ausgehend von Parkposition P in Richtung der Fahrbahn 306 zurück, so dass sich typischerweise in der finalen Parkposition ein geringer Abstand zwischen den Hinterrädern 320 und dem Bordstein 310 ergibt.

Auf dem Bildschirm im Fahrzeugcockpit wird dem Fahrer ein erfolgreicher Abschluss des Parkmanövers signalisiert.

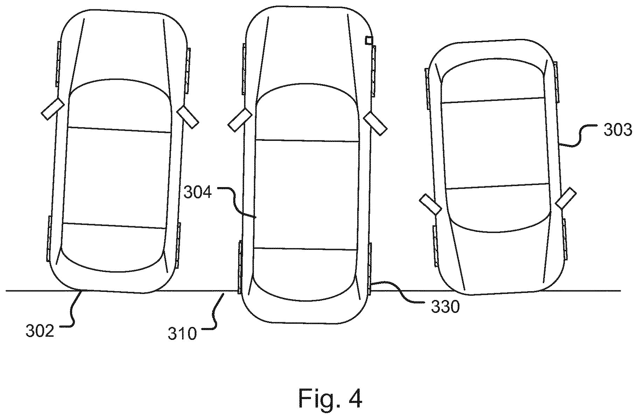

In Fig. 4 ist die die resultierende Parkposition des Fahrzeugs nach Beenden des Parkmanövers dargestellt.

## Patentansprüche

1. Parkassistenzsystem zum Durchführen eines automatisierten Einparkmanövers eines Kraftfahrzeugs (304) in eine Querparklücke (301) quer zur Fahrbahn (306) mit automatisierter Längs- und Querführung entlang einer Einparktrajektorie (T), welches eingerichtet ist,
- eine am Ende des Einparkmanövers einzunehmende Parkendposition (PEP) für das Kraftfahrzeug (304) festzulegen,
- während der Durchführung des Einparkmanövers festzustellen, dass ein für das Antriebsmoment des Antriebsmotors charakteristisches Signal (int) ein erstes Kriterium erfüllt ist, dessen Erfüllen auf ein Stoßen eines oder mehrerer Räder (330) an ein Hindernis (310) hinweist,
- festzustellen, dass die bei Stoßen eines oder mehrerer Räder (330) an das Hindernis (310) erreichte Fahrzeugposition (P) im Vergleich mit der Parkendposition (PEP) ein zweites Kriterium erfüllt, dessen Erfüllen darauf hinweist, dass es sich bei dem Hindernis um ein die Querparklücke (301) nach hinten hin begrenzendes Begrenzungsbodenhindernis (310) handelt, und **dadurch gekennzeichnet, dass** das Parkassistenzsystem eingerichtet ist,
- im Fall des Erfüllens beider Kriterien das Einparkmanöver vor Erreichen der vorher festgelegten Parkendposition (PEP) zu beenden.

2. Parkassistenzsystem nach Anspruch 1, wobei
- das Parkassistenzsystem eine insbesondere optische oder akustische Ausgabeeinrichtung zur Signalisierung eines erfolgreichen Abschlusses eines Einparkmanövers an den Fahrer umfasst und
- das Parkassistenzsystem eingerichtet ist, im Fall des Erfüllens beider Kriterien bei Beenden des Einparkmanövers dem Fahrer einen erfolgreichen Abschluss des Einparkmanövers zu signalisieren.

3. Parkassistenzsystem nach einem der vorhergehenden Ansprüche, wobei die bei Stoßen eines oder mehrerer Räder (330) an das Hindernis erreichte Fahrzeugposition (P) im Vergleich mit der Parkendposition (PEP) das zweite Kriterium erfüllt, wenn ein Abweichungsmaß (d) zwischen der bei Stoßen eines oder mehrerer Räder (330) an das Hindernis erreichten Fahrzeugposition (P) und der Parkendposition (PEP) kleiner oder kleiner gleich als ein Schwellwert (d_{TH}) ist.

4. Parkassistenzsystem nach Anspruch 3, wobei der Schwellwert (d_{TH}) für das Abweichungsmaß ein Wert im Bereich von 5 cm bis 100 cm ist.

5. Parkassistenzsystem nach einem der vorhergehenden Ansprüche, wobei ein Abweichungsmaß (d) zwischen der bei Stoßen eines oder mehrerer Räder (330) an das Hindernis (330) erreichten Fahrzeugposition (P) und der Parkendposition (PEP) berechnet wird.

6. Parkassistenzsystem nach einem der vorhergehenden Ansprüche, wobei das Parkassistenzsystem eingerichtet ist, im Fall des Erfüllens beider Kriterien das Einparkmanöver an der bei Stoßen eines oder mehrerer Räder (330) an das Hindernis erreichten Fahrzeugposition (P) zu beenden.

7. Parkassistenzsystem nach einem der Ansprüche 1 bis 5, wobei das Parkassistenzsystem eingerichtet ist, im Fall des Erfüllens beider Kriterien die Fahrtrichtung umzukehren und das Kraftfahrzeug (304) entgegen der bisherigen Fahrtrichtung um eine gewisse Strecke zu bewegen und erst dann das Einparkmanöver zu beenden.

8. Parkassistenzsystem nach einem der vorhergehenden Ansprüche, wobei das Einparkmanöver ein Einparkmanöver in Rückwärtsrichtung ist und die Räder die Hinterräder (303) eines Kraftwagens (304) sind.

9. Parkassistenzsystem nach einem der vorhergehenden Ansprüche, wobei das für das Antriebsmoment des Antriebsmotors charakteristische Signal (int) das erste Kriterium erfüllt, wenn das Signal größer oder größer gleich als ein Schwellwert (int_{schwell1}) ist.

10. Parkassistenzsystem nach einem der vorhergehenden Ansprüche, wobei
- das Parkassistenzsystem einen Geschwindigkeitsregler zur Regelung der Geschwindigkeit (vᵢₛₜ) des Kraftfahrzeugs auf eine durch das Parkassistenzsystem vorgegebene Soll-Geschwindigkeit (vₛₒₗₗ) umfasst,
- der Geschwindigkeitsregler einen Integrator (2) zur Integration einer Regelabweichung (Δv) umfasst und
- das für das Antriebsmoment des Antriebsmotors charakteristische Signal (int) ein Signal am Ausgang des Integrators (2) oder ein davon abhängiges Signal ist.

11. Parkassistenzsystem nach einem der vorhergehenden Ansprüche, wobei das Parkassistenzsystem eingerichtet ist,
- festzustellen, dass die Ist-Geschwindigkeit (vᵢₛₜ) des Fahrzeugs im Wesentlichen null ist, und
- für den Fall, dass die Ist-Geschwindigkeit im Wesentlichen null ist, insbesondere zu prüfen, ob das für das Antriebsmoment des Antriebsmotors charakteristische Signal (int) das erste Kriterium erfüllt.

12. Parkassistenzsystem nach einem der vorhergehenden Ansprüche, wobei es sich bei dem die Querparklücke (301) nach hinten begrenzenden Begrenzungsbodenhindernis (310) um einen die Parklücke nach hinten begrenzenden Bordstein handelt.

13. Parkassistenzsystem nach einem der vorhergehenden Ansprüche, wobei
- die Querparklücke (301) durch ein seitliches Objekt (302) auf einer Seite der Querparklücke und/oder durch ein anderes seitliches Objekt (303) auf der anderen Seite der Querparklücke begrenzt wird und
- das Parkassistenzsystem eingerichtet ist,
- vor der Durchführung des Einparkmanövers mittels einer Sensorik (307) die Erstreckung (320) des einen Objekts in Richtung Fahrbahn (306) und/oder der Erstreckung (321) des anderen Objekts (303) in Richtung Fahrbahn (306) zu bestimmen und
- basierend hierauf eine Parkendposition (PEP) festzulegen.

14. Verfahren zum Durchführen eines automatisierten Einparkmanövers eines Kraftfahrzeugs (304) in eine Querparklücke (301) quer zur Fahrbahn (306) mit automatisierter Längs- und Querführung entlang einer Einparktrajektorie (T), mit den Schritten:
- Festlegen einer am Ende des Einparkmanövers einzunehmenden Parkendposition (306) für das Kraftfahrzeug (304);
- während der Durchführung des Einparkmanövers, Feststellen (120), dass ein für das Antriebsmoment des Antriebsmotors charakteristisches Signal ein erstes Kriterium erfüllt ist, dessen Erfüllen auf ein Stoßen eines oder mehrerer Räder (330) an ein Hindernis (310) hinweist;
- Feststellen (210), dass die bei Stoßen eines oder mehrerer Räder (330) an das Hindernis (310) erreichte Fahrzeugposition (P) im Vergleich mit der Parkendposition (PEP) ein zweites Kriterium erfüllt, dessen Erfüllen darauf hinweist, dass es sich bei dem Hindernis (310) um ein die Querparklücke (301) nach hinten hin begrenzendes Begrenzungsbodenhindernis handelt; und
**gekennzeichnet durch** den folgenden Schritt:
- im Fall des Erfüllens beider Kriterien, Beenden des Einparkmanövers vor Erreichen der vorher festgelegten Parkendposition (PEP).

## Claims

1. A parking assist system for performing an automated parking manoeuvre of a motor vehicle (304) into a transverse parking space (301) arranged transversely with respect to a roadway (306) with automated longitudinal and transverse guidance along a parking trajectory (T), wherein the system is configured to:
- define a parking end position (PEP) for the motor vehicle (304) to be assumed at the end of the parking manoeuvre,
- determine, while the parking manoeuvre is being performed, that a signal (int) which is characteristic of the drive torque of the drive engine fulfils a first criterion, the fulfilment of which indicates impacting of at least one of the wheels (330) against an obstacle (310),
- determine that, in comparison with the parking end position, the vehicle position (P) reached when at least one of the wheels (330) impacts against the obstacle (310) fulfils a second criterion, the fulfilment of which indicates that the obstacle is a delimiting ground obstacle (310) which delimits the transverse parking space (301) to the rear, and
**characterised in that** the parking assist system is configured to:
- end the parking manoeuvre before the parking end position (PEP) defined previously is reached, if both criteria are fulfilled.

2. A parking assist system according to claim 1, wherein
- the parking assist system comprises an output device, more especially an optical or acoustic output device, for signalling a successful conclusion of a parking manoeuvre to the driver, and
- the parking assist system is configured to signal a successful conclusion of the parking manoeuvre to the driver when the parking manoeuvre ends if both criteria are fulfilled.

3. A parking assist system according to either one of the preceding claims, wherein, in comparison with the parking end position (PEP), the vehicle position (P) which is reached when at least one of the wheels (330) impacts against the obstacle fulfils the second criterion if a degree of difference (d) between the vehicle position (P) which is reached when at least one of the wheels (330) impacts against the obstacle and the parking end position (PEP) is smaller than or smaller than or equal to a threshold value (d_{TH}).

4. A parking assist system according to claim 3, wherein the threshold value (d_{TH}) for the degree of difference is a value in the range of from 5 cm to 100 cm.

5. A parking assist system according to any one of the preceding claims, wherein the degree of difference (d) between the vehicle position (P) reached when at least one of the wheels (330) impacts against the obstacle (330) and the parking end position (PEP) is calculated.

6. A parking assist system according to any one of the preceding claims, wherein, if both criteria are fulfilled, the parking assist system is configured to end the parking manoeuvre at the vehicle position (P) which is reached when at least one of the wheels (330) impacts against the obstacle.

7. A parking assist system according to any one of claims 1 to 5, wherein, if both criteria are fulfilled, the parking assist system is configured to reverse the direction of travel and move the motor vehicle (304) a certain distance counter to the prior direction of travel, and only thereafter to end the parking manoeuvre.

8. A parking assist system according to any one of the preceding claims, wherein the parking manoeuvre is a parking manoeuvre in a reverse direction, and the wheels are the rear wheels (303) of a motor vehicle (304).

9. A parking assist system according to any one of the preceding claims, wherein the signal (int) which is characteristic of the drive torque of the drive engine fulfils the first criterion if the signal is greater than or greater than or equal to a threshold value (intₜₕᵣₑₛₕ₁).

10. A parking assist system according to any one of the preceding claims, wherein
- the parking assist system comprises a cruise controller configured to control the speed (v_{act}) of the motor vehicle to a setpoint speed (vₛₑₜₚ) which is predefined by the parking assist system,
- the cruise controller comprises an integrator (2) for integrating a control error (Δv), and
- the signal (int) which is characteristic of the drive torque of the drive engine is a signal at the output of the integrator (2) or a signal which is dependent thereon.

11. A parking assist system according to any one of the preceding claims, wherein the parking assist system is configured to:
- determine that the actual speed (v_{act}) of the vehicle is substantially zero, and
- more especially check, in the event of the actual speed being substantially zero, whether the signal (int) which is characteristic of the drive torque of the drive engine fulfils the first criterion.

12. A parking assist system according to any one of the preceding claims, wherein the delimiting ground obstacle (310) which delimits the transverse parking space (301) to the rear is a kerbstone which delimits the parking space to the rear.

13. A parking assist system according to any one of the preceding claims, wherein
- the transverse parking space (301) is delimited by a lateral object (302) on one side of the transverse parking space and/or by another lateral object (303) on the other side of the transverse parking space, and
- the parking assist system is configured to:
- determine, before the parking manoeuvre is performed, the extent (320) of one of the objects in the direction of the roadway (306) and/or the extent (321) of the other object (303) in the direction of the roadway (306) using a sensor system (307), and
- define the parking end position (PEP) on the basis thereof.

14. A method for performing an automated parking manoeuvre of a motor vehicle (304) into a transverse parking space (301) arranged transversely with respect to a roadway (306) with automated longitudinal and transverse guidance along a parking trajectory (T), the method comprising the steps of:
- defining a parking end position (306) for the motor vehicle (304) to be assumed at the end of the parking manoeuvre,
- determining (120), while the parking manoeuvre is being performed, that a signal which is characteristic of the drive torque of the drive engine fulfils a first criterion, the fulfilment of which indicates impacting of at least one of the wheels (330) against an obstacle (310);
- determining (210) that, in comparison with the parking end position (PEP), the vehicle position (P) reached when at least one of the wheels (330) impacts against the obstacle (310) fulfils a second criterion, the fulfilment of which indicates that the obstacle (310) is a delimiting ground obstacle which delimits the transverse parking space (301) to the rear, and
**characterised by** the following step:
- ending the parking manoeuvre before the parking end position (PEP) defined beforehand is reached, if both criteria are fulfilled.

## Revendications

1. Système d'assistance au stationnement permettant d'effectuer une manoeuvre de rangement automatisée d'un véhicule (304) dans un emplacement de stationnement (301) transversal à la chaussée (306) avec un guidage longitudinal et transversal automatisé le long d'une trajectoire de rangement (T) qui est réalisé pour :
- fixer une position de fin de stationnement (PEP) devant être prise à la fin de la manoeuvre de rangement par le véhicule (304),
- déterminer pendant la mise en oeuvre de la manoeuvre de rangement qu'un signal (int) caractéristique du couple d'entraînement du moteur d'entraînement satisfait à un premier critère dont le respect indique un choc d'une ou de plusieurs roue(s) (330) contre un obstacle (310),
- déterminer que la position (P) du véhicule atteinte lors du choc d'une ou plusieurs roue(s) (330) contre l'obstacle (310) satisfait en comparaison avec la position de fin de stationnement (PEP) à un second critère dont le respect indique que, l'obstacle correspond à un obstacle au sol de limitation (310) limitant ver l'arrière l'emplacement de stationnement transversal (301),
**caractérisé en ce que**
le système d'assistance de stationnement est réalisé pour permettre,
- en cas de satisfaction aux deux critères d'arrêter la manoeuvre de rangement avant d'avoir atteint la position de fin de stationnement (PEP) préalablement fixée.

2. Système d'assistance au stationnement conforme à la revendication 1,
dans lequel :
- le système d'assistance au stationnement comporte un dispositif d'émission d'un signal en particulier optique ou acoustique pour signaler au conducteur l'achèvement réussi d'une manoeuvre de rangement, et
- le système d'assistance au stationnement est réalisé pour signaler au conducteur en cas de respect des deux critères, à la fin de la manoeuvre de rangement, l'achèvement réussi de cette manoeuvre de rangement.

3. Système s'assistance au stationnement conforme à l'une des revendications précédentes,
dans lequel la position (P) du véhicule atteinte lors de choc d'une ou de plusieurs roue(s) (330) sur l'obstacle, en comparaison avec la position de fin de stationnement (PEP) remplit le second critère lorsque la valeur de l'écart (d) entre la position (P) du véhicule atteinte lors du choc d'une ou de plusieurs roue(s) (330) contre l'obstacle et la position de fin de stationnement (PEP) est inférieur ou égal à une valeur de seuil (d_{TH}).

4. Système d'assistance au stationnement conforme à la revendication 3,
dans lequel la valeur de seuil (d_{TH}) de la valeur de l'écart est une valeur située dans la plage de 5 cm à 100 cm.

5. Système d'assistance au stationnement conforme à l'une des revendications précédentes,
dans lequel la valeur de l'écart (d) entre la position (P) du véhicule atteinte lors d'un choc d'une ou de plusieurs roue(s) (330) contre l'obstacle (330) et la position de fin de stationnement (PEP) est calculée.

6. Système d'assistance au stationnement conforme à l'une des revendications précédentes,
dans lequel le système d'assistance au stationnement est réalisé pour permettre de terminer, la manoeuvre de rangement lorsque les deux critères sont remplis dans la position (P) du véhicule atteinte lors du choc d'une ou de plusieurs roue(s) (330) contre l'obstacle.

7. Système d'assistance au stationnement conforme à l'une des revendications 1 à 5,
dans lequel le système d'assistance au stationnement est réalisé pour permettre, lorsque les deux critères sont remplis, d'inverser, le sens de déplacement et de déplacer le véhicule (304) dans la direction opposée à la direction de déplacement précédente sur un trajet donné et de ne terminer qu'en suite la manoeuvre de rangement.

8. Système d'assistance au stationnement conforme à l'une des revendications précédentes,
dans lequel la manoeuvre de rangement est une manoeuvre de rangement en marche arrière, et les roues sont les roues arrières (303) d'un véhicule (304).

9. Système d'assistance au stationnement conforme à l'une des revendications précédentes,
dans lequel signal (int) caractéristique du couple d'entraînement du moteur d'entraînement remplit le premier critère lorsque ce signal est supérieur ou égal à une valeur de seuil (int_{schwell1}).

10. Système d'assistance au stationnement conforme à l'une des revendications précédentes,
dans lequel :
- le système d'assistance au stationnement comporte un régulateur de vitesse permettant de réguler la vitesse (vᵢₛₜ) du véhicule sur une vitesse de consigne (vₛₒₗₗ) prédéfinie par le système d'assistance au stationnement,
- le régulateur de vitesse comporte un intégrateur (2) permettant d'intégrer un écart de réglage (Δv), et
- le signal (int) caractéristique du couple d'entraînement du moteur d'entraînement est le signal de sortie de l'intégrateur (2) ou un signal dépendant de celui-ci.

11. Système d'assistance au stationnement conforme à l'une des revendications précédentes,
dans lequel le système d'assistance au stationnement et conçu :
- pour déterminer que la vitesse réelle (Vᵢₛₜ) du véhicule est essentiellement nulle, et
- lorsque la vitesse réelle est essentiellement nulle, en particulier pour vérifier si le signal (int) caractéristique du couple d'entraînement du moteur d'entraînement remplit le premier critère.

12. Système d'assistance au stationnement conforme à l'une des revendications précédentes,
dans lequel l'obstacle au sol (310) limitant vers l'arrière l'emplacement de stationnement transversal (301) est constitué par une bordure limitant l'emplacement de stationnement vers l'arrière.

13. Système d'assistance au stationnement conforme à l'une des revendications précédentes,
dans lequel :
- l'emplacement de stationnement transversal (301) est limité par un objet latéral (302) sur un côté de cet emplacement de stationnement transversal et/ou par un autre objet latéral (303) sur l'autre côté de cet emplacement de stationnement transversal, et
- le système d'assistance au stationnement est réalisé :
- pour déterminer, avant la mise en oeuvre de la manoeuvre de rangement, au moyen d'un système de capteurs (307) l'extension (320) de l'un des objets en direction de la chaussée (306) et/ou l'extension (321) de l'autre objet (303) en direction de la chaussée (306), et
- pour déterminer en conséquence la position de fin de stationnement (PEP).

14. Procédé permettant la mise en oeuvre d'une manoeuvre de rangement automatisée d'un véhicule (304) dans un emplacement de stationnement (301) transversal à la chaussée (306) avec un guidage longitudinal et un guidage transversal automatisé le long d'une trajectoire de rangement (T) comprenant des étapes consistant à :
- fixer une position de fin de stationnement (306) devant être prise par le véhicule (304) à la fin de la manoeuvre de rangement,
- pendant la mise en oeuvre de la manoeuvre de rangement,
- déterminer (120) qu'un signal caractéristique du couple d'entraînement du moteur d'entraînement satisfait à un premier critère dont le respect indique un choc d'une ou de plusieurs roue(s) (330) contre un obstacle (310),
- déterminer (210) que le position (P) du véhicule atteinte lors du choc d'une ou de plusieurs roue(s) (330) contre l'obstacle (310) satisfait en comparaison avec la position de fin de stationnement (PEP) à un second critère dont le respect indique que l'obstacle (310) correspond à un obstacle au sol limitant vers l'arrière l'emplacement de stationnement (301),
**caractérisé par** l'étape suivante consistant à :
- lorsque les deux critères sont remplis, terminer la manoeuvre de rangement avant d'avoir atteint la position de fin de stationnement (PEP) préalablement fixée.
